# EUROPÄISCHE PATENTANMELDUNG

(11) **EP 1 801 018 A1**
(43) Veröffentlichungstag der Anmeldung: **27.06.2007**
(21) Anmeldenummer: 05112957.5
(22) Anmeldetag: 23.12.2005
(51) Int. Cl.: B65B 69/00, B29B 13/02

(54) **Verwendung einer Anwärmvorrichtung und Transport- und Lagersystem für Heissschmelzklebstoffe**

(71) Anmelder: Sika Technology AG, 6340 Baar (CH)
(72) Erfinder: Linnenbrink, Martin, Apensen 21641 (DE); Nitzsche, Torsten, Hamburg 21149 (CH)
(74) Vertreter: Isler, Jörg

(57) **Zusammenfassung**

Die Erfindung betrifft die Verwendung einer erhitzten Platte (7) zum Lösen von Verklebungen einer Verpackungsfolie (5) um einen Heissschmelzklebstoff (4) in einem Transportbehälter (1) und eine Anwärmvorrichtung zum Lösen von Verklebungen einer Verpackungsfolie (5) um einen Heissschmelzklebstoff in einem Transportbehälter mit einem Handgriff (9), einer Platte (7), deren Querschnitt dem Querschnitt des Transportbehälters (1) angepasst ist, und einer Heizvorrichtung (12.1, 12.2, 15, 17) für die Platte (7). Ausserdem betrifft die Erfindung ein Lager- und Transportsystem für Heissschmelzklebstoffe bestehend aus, einer Folienverpackung (5) für den Heissschmelzklebstoff, einem Transport- und Lagerbehälter (1) zur Aufnahme des in der Folienverpackung (5) befindlichen Heissschmelzklebstoffs (4), und einer Anwärmvorrichtung zum Lösen von Verklebungen der Verpackungsfolie (5) um den Heissschmelzklebstoff (4) in dem Transport- und Lagerbehälter (1) zumindest bestehend aus einer Platte (7), deren Querschnitt dem Querschnitt des Transport- und Lagerbehälters (1) angepasst ist, und einem Mittel zur Hitzeerzeugung (12.1, 12.2, 13, 15, 17) an der Platte.

## Beschreibung

### Technisches Gebiet

Die Erfindung betrifft die Verwendung einer Anwärmvorrichtung, eine Anwärmvorrichtung zum Lösen von Verklebungen einer Verpackungsfolie um einen Heissschmelzklebstoff in einem Transportbehälter und ein Lager- und Transportsystem für Heissschmelzklebstoffe.

### Stand der Technik

Es ist allgemein bekannt, dass Heissschmelzklebstoffe (vom Fachmann auch als Hot Melts bezeichnet) für die industrielle Verwendung in Fässern oder in einem sogenannten Hoobock aufbewahrt und transportiert werden, wobei die Heissschmelzklebstoffe zur Vermeidung eines direkten Kontaktes des Klebstoffs mit dem Transportbehälter von einem aluminiumbeschichteten PE-Beutel umfasst werden. Als Heissschmelzklebstoffe werden beispielsweise reaktive PUR-Hot Melts oder reaktive Polyolefin-Hot Melts verwendet. Zur Nutzung eines solchen Heissschmelzklebstoffs wird der Transportbehälter auf der Oberseite geöffnet und es muss die Oberseite des Beutels abgeschnitten werden, so dass die Vorrichtung zum Anschmelzen und Absaugen des Heissschmelzklebstoffs direkt mit dem Klebstoff in Kontakt treten kann und dieser aus dem Transportbehälter nach vorheriger Erwärmung abgesaugt werden kann.

Ein Problem bei dieser Vorgehensweise besteht darin, dass die Folie sich fest mit dem erkalteten Heissschmelzklebstoff verbindet und nur sehr schwer abzuziehen ist. Dies wird zusätzlich dadurch erschwert, dass der Beutel auf der Oberseite in der Regel nicht glatt, sondern mit Falten versehen ist, in die Heissschmelzklebstoff eingeflossen ist und damit das Lösen der Folie zusätzlich erschwert. Bekannt ist hierbei, dass man nach dem Öffnen des Transportbehälters die Oberseite des Beutels durch Heissluftgebläse erwärmt, um die Folie vom Heissschmelzklebstoff zu lösen, so dass anschliessend ein "Deckel" des Beutels herausgeschnitten und abgenommen werden kann. Dabei kommt erschwerend hinzu, dass die Heissluftgebläse zwar lokal hohe Hitze erzeugen, jedoch keine gleichmässige Wärme über die gesamte Oberfläche des nach oben freistehenden Beutels erzeugen können. Hierdurch ergibt sich eine relativ aufwendige Prozedur, bis ein solcher Transportbehälter tatsächlich für den Einsatz in automatischen Maschinen verwendet werden kann. Weiterhin kann durch das lokale Auftreten von sehr hoher Temperatur zuweilen eine thermische Schädigung und Zersetzung des Klebstoffes auftreten.

### Darstellung der Erfindung

Es ist daher Aufgabe der Erfindung, eine Vorrichtung zu finden, welche die zuvor beschriebene Prozedur des Ablösens der Folie im Öffnungsbereich des Behälters vereinfacht.

Diese Aufgabe wird durch die Merkmale des unabhängigen Patentanspruches gelöst. Vorteilhafte Weiterbildungen der Erfindung sind Gegenstand untergeordneter Ansprüche.

Die Erfinder haben erkannt, dass ein gleichmässiges Anlösen der Folie im Öffnungsbereich des Transportbehälters durch eine erhitzte Platte wesentlich einfacher ist, als die Verwendung eines Heissluftföns, wobei die Aufheizung einer solchen Platte, die vorzugsweise im Querschnitt dem Transportbehälterquerschnitt entspricht, auf verschiedene Weise durchgeführt werden kann.

Entsprechend diesem Grundgedanken schlagen die Erfinder die Verwendung einer erhitzten Platte zum Lösen von Verklebungen einer Verpackungsfolie um einen Heissschmelzklebstoff (Hot Melt) in einem Transportbehälter vor. Dabei kann es sich bei dem Transportbehälter bevorzugt um ein Fass handeln, wobei die Platte vorzugsweise einen kreisförmigen Querschnitt aufweisen sollte. Diese Platte kann beispielsweise durch einen elektrisch betriebenen Heizdraht, der mit der Platte verbunden ist, durchgeführt werden oder es besteht die Möglichkeit, die Platte mit Hilfe einer gasbetriebenen Heizvorrichtung zu erhitzen.

Es besteht allerdings auch die Möglichkeit, eine vorgewärmte Platte zu verwenden. Beispielsweise kann die Vorwärmung in einer Art Ofen geschehen oder es besteht auch die Möglichkeit, wenn die Platte im Wesentlichen aus Metall besteht, die Hitze in die Platte durch Induktionsströme zu übertragen.

Wird eine vorgewärmte Platte verwendet, so sollte die Platte eine Wärmeleistung zwischen 0,2 und 2,0 KW aufweisen. Diese Wärmeleistung sollte dabei so berechnet sein, dass sie ausreicht, den jeweils verwendeten Heissschmelzklebstoff durch ihre Wärmekapazität im gewünschten Bereich anzuschmelzen, wobei gleichzeitig die Betriebstemperatur der Heizplatte so gewählt werden muss, dass keine Schädigung der verwendeten Folie des Beutels oder des Klebstoffes auftritt.

Die Platte kann zusätzlich auf der Oberseite mit einer Isolationsschicht versehen werden, damit die Verbrennungsgefahr beim Betrieb durch das Bedienpersonal vermindert wird und es ist ausserdem vorteilhaft, wenn die Platte auf ihrer Oberseite mindestens einen Handgriff aufweist, so dass auch mit blossen Händen die Platte ohne Verbrennungsgefahr getragen werden kann.

Neben der oben beschriebenen Verwendung schlagen die Erfinder auch eine Anwärmvorrichtung zum Lösen von Verklebungen einer Verpackungsfolie um einen Heissschmelzklebstoff in einem Transportbehälter vor, wobei dieser mindestens einen Handgriff, eine Platte, deren Querschnitt dem Querschnitt des Transportbehälters angepasst ist, und eine Heizvorrichtung für die Platte aufweist.

Diese Heizvorrichtung kann beispielsweise mindestens einen elektrisch betriebenen Heizdraht oder einen Gasbrenner aufweisen. Des Weiteren wird vorgeschlagen, dass die Anwärmvorrichtung mit einer Temperaturregelvorrichtung versehen ist, um jeweils die gewünschte Schmelztemperatur für den Heissschmelzklebstoff an der Platte zu erreichen. Bei der Verwendung von reaktiven PUR-Hot Melts beträgt die Schmelztemperatur 60° bis 120°C, wobei bevorzugt ein Temperaturbereich zum Anschmelzen des Hot Melts von 80° bis 100°C vorgesehen ist. Im Falle von reaktiven Polyolefin-Hot Melts beträgt die Schmelztemperatur 100° bis 180°C. Entsprechend wird zum Anschmelzen des Polyolefin-Hot Melts ein bevorzugter Temperaturbereich von 120° bis 160°C vorgeschlagen.

Die Erfinder schlagen grundsätzlich zwei unterschiedliche Ausführungsformen für die Anwärmvorrichtung vor. Einerseits eine Platte, die fest mit der Heizvorrichtung verbunden ist. Beispielsweise mit den oben erwähnten Heizdrähten oder einem Gasbrenner, wobei entweder eine entsprechende elektrische Leitung oder eine Gasleitung oder ein Gasvorratsbehälter zum Betrieb mit der Platte verbunden sein muss. Andererseits wird vorgeschlagen, die Heizvorrichtung und die Platte voneinander in eigene Einheiten zu trennen, so dass die Platte in einer Heizvorrichtung eingeschoben werden kann, dort die gewünschte Temperatur der Platte eingestellt werden kann und die Platte ohne sonstige Anhängsel zum Abschmelzen der Folienkappe direkt zum Transportbehälter gebracht werden kann. Hierbei ist allerdings darauf zu achten, dass die Wärmekapazität einer solchen Platte ausreicht, um genügend Heissschmelzklebstoff anschmelzen zu können, ohne dass die Anfangstemperatur der Platte zu hoch gewählt werden muss, um Schädigungen der Folie zu vermeiden.

Im Übrigen ist auch darauf zu achten, dass die Temperatur der Platte grundsätzlich nicht zu hoch eingestellt wird, da der Heissschmelzklebstoff bei Erreichen einer zu hohen Temperatur thermisch geschädigt wird und monomere Isocyanate freisetzt, die zu Vergiftungserscheinungen beim Bedienpersonal führen können. Genau hierin ist ein weiterer grosser Vorteil der erfindungsgemässen Anwärmvorrichtung zu erkennen, da bei den bisher verwendeten industriellen Heissluftgeräten eine Begrenzung der Temperatur nur sehr schwer durchführbar ist, während bei den hier vorgestellten Anwärmvorrichtungen beispielsweise eine zusätzliche Maximalbegrenzung der Temperatur, unabhängig von der manuell wählbaren Temperatur der Temperaturregelvorrichtung, vorgesehen werden kann. Eine solche Maximalbegrenzung sollte dann in einem Bereich liegen, der sicherstellt, dass die Freisetzung von Isocyanaten beim Kontakt der Platte mit dem Heissschmelzklebstoff nicht möglich ist.

Die Erfinder schlagen ausserdem ein Lager- und Transportsystem für Heissschmelzklebstoffe vor, bestehend aus einer Folienverpackung für den Heissschmelzklebstoff, einem Transport- und Lagerbehälter zur Aufnahme des in der Folienverpackung befindlichen Heissschmelzklebstoffs und einer Anwärmvorrichtung zum Lösen von Verklebungen der Verpackungsfolie um den Heissschmelzklebstoff in dem Transport- und Lagerbehälter, zumindest bestehend aus einer Platte, deren Querschnitt dem Querschnitt des Transport- und Lagerbehälters angepasst ist,und einem Mittel zur Hitzeerzeugung an der Platte.

Die Anwärmvorrichtung kann beispielsweise ein beheizbarer Deckel des Transport- und Lagerbehälters sein. Eine Variante besteht hierbei darin, dass im Deckel des Transport- und Lagerbehälters ein Hohlraum vorgesehen ist, in dem mindestens eine chemische Substanz eingelagert ist, die nach einer Initialreaktion Hitze entwickelt und den Deckel erhitzt.

Eine andere Möglichkeit besteht darin, dass in einem Hohlraum im Deckel des Transport- und Lagerbehälters mindestens zwei chemische Substanzen getrennt voneinander eingelagert sind, die, wenn sie miteinander vermischt werden, eine chemische Reaktion durchführen, die Hitze entwickelt, wodurch wiederum der Deckel selbst aufgeheizt wird. Durch diese Ausführungsvarianten ist es möglich, auch ohne besondere Infrastruktur, wie Gasanschluss oder elektrischen Anschluss, ein entsprechendes Ablösen der Folie im Deckelbereich zu bewerkstelligen.

Es ist vorteilhaft, insbesondere bei elektrisch betriebenen Anwärmvorrichtungen, wenn in der Anwärmvorrichtung eine Temperaturregelvorrichtung vorhanden ist, mittels welchem eine erwünschte Temperatur erzielt werden kann. Eine derartige Temperaturregelvorrichtung regelt die zugeführte Energie so, dass die erwünschte Temperatur an der Anwärmvorrichtung erreicht wird, so dass der Heissschmelzklebstoff angeschmolzen werden kann, aber weder die Folie noch der Klebstoff eine thermische Schädigung erfährt.

Nachdem der Heissschmelzklebstoff angeschmolzen ist, kann die Folie entweder nach dem Entfernen der Anwärmvorrichtung aufgeschnitten werden, oder sie kann vor dem Entfernen der Anwärmvorrichtung aufgeschnitten werden. Dies kann beispielsweise dadurch erfolgen, dass ein Messer in den Spalt zwischen Anwärmvorrichtung und Wand des Transportbehälters eingeführt wird und den Konturen der Anwärmvorrichtung entlang geführt wird. Oder die Anwärmvorrichtung kann an der Unterseite ein oder mehrere Messer oder Schneidkanten, insbesondere im Randbereich der Aufwärmvorrichtung, aufweisen. Falls ein derartiges Messer oder Schneidkante in sich geschlossen ist, typischerweise einen Kreis bildet, kann eine Öffnung in die Folie eingeschnitten, beziehungsweise ausgestanzt, werden. Falls lediglich ein Messer oder von einer getrennte Messer vorliegen, kann das Aufschneiden beispielsweise durch ein Drehen der Aufwämvorrichtung einfach bewerkstelligt werden.
Nach dem Erzeugen der Öffnung im Beutel und Entfernen des Ausschnittes kann der Heissschmelzklebstoff aus dem Beutel herausgepresst und/oder abgesaugt werden. Dies erfolgt typischerweise durch ein Einsetzen einer Platte, insbesondere einer Folgeplatte, welche auf den Heissschmelzklebstoff im Transportbehälter drückt. Der Heissschmelzklebstoff wird dann durch eine Absaugleitung zum Applikationsgerät geführt.

In einer Ausführungsform der Erfindung ist die Anwärmvorrichtung derart ausgestaltet, dass sie auch als Folgeplatte verwendet werden kann. Hierbei ist in der Anwärmvorrichtung ein Heissschmelzklebstoff-Ableitmittel, beispielsweise eine Hohlnadel oder ein Rohrstutzen, integriert. Durch ein derartiges Heissschmelzklebstoff-Ableitmittel wird der Klebstoff aus dem Behälter abgeleitet. Vorzugsweise sind am Rand der Anwärmvorrichtung dann auch Abdichtmittel vorhanden.

### Kurze Beschreibung der Zeichnungen

Im Folgenden wird die Erfindung anhand bevorzugter Ausführungsbeispiele mit Hilfe der Figuren näher beschrieben, wobei nur die zum Verständnis der Erfindung notwendigen Merkmale dargestellt sind. Gleiche Elemente sind in den verschiedenen Figuren mit den gleichen Bezugszeichen versehen.

Es zeigen im Einzelnen:
- FIG 1:: Bekannter Vorratsbehälter mit in Folie verpacktem Heissschmelzklebstoff;
- FIG 2:: Behälter gemäss Figur 1, mit oben aufgesetzter vorheizbarer Heizplatte;
- FIG 3:: Behälter gemäss Figur 1, mit oben aufgesetzter elektrisch betriebener Heizplatte;
- FIG 4:: Behälter gemäss Figur 1, mit oben aufgesetzter gasbetriebener Heizplatte;
- FIG 5:: Behälter mit Deckel mit integrierter Anwärmvorrichtung durch zwei exotherm reagierende Substanzen;
- FIG 6:: Transportbehälter für Heissschmelzklebstoff mit Deckel mit integrierter elektrischer Anwärmvorrichtung;
- FIG 7:: Behälter mit massivem Metalldeckel und aufgesetzter Induktion-Heizvorrichtung;
- FIG 8:: Behälter mit massivem Deckel mit aufgesetztem Gasbrenner;
- FIG 9:: Behälter mit Absaugvorrichtung.

### Wege zur Ausführung der Erfindung

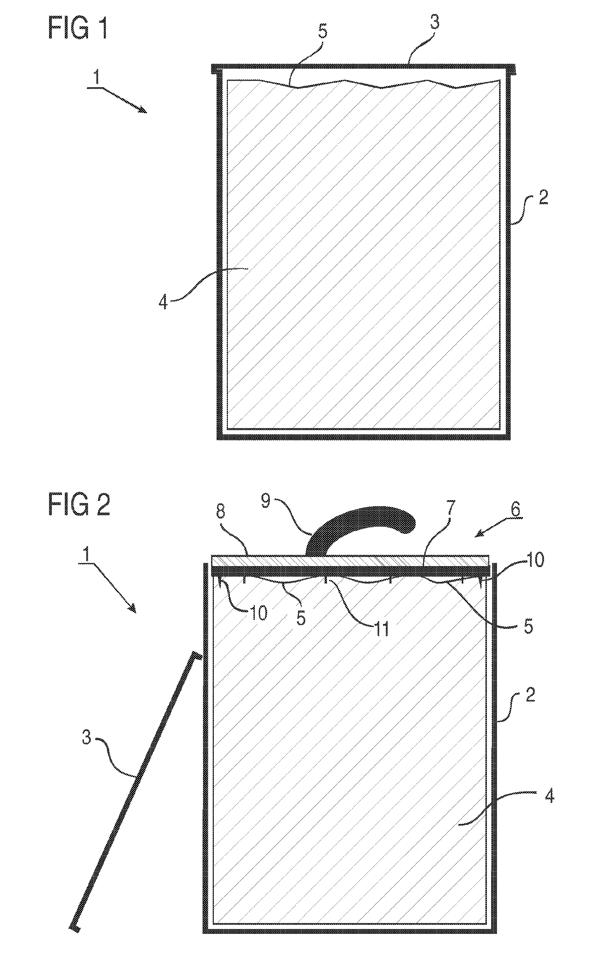

Die **Figur 1** zeigt einen bekannten Transport- und Lagerbehälter 1, einen sogenannten Hoobock, mit einer Aussenwandung 2 und einem oben angeordneten Deckel 3, in dem sich ein Hot Melt 4, umgeben von einer Folie 5, befindet, die - wie hier durch die gewellten Linien im oberen Bereich angezeigt - regelmässig Falten wirft und dadurch das Ablösen der Folie vom fest gewordenen Hot Melt stark erschwert.

Erfindungsgemäss wird beispielsweise, wie es in der **Figur 2** gezeigt ist, die Verwendung einer Anwärmvorrichtung 6 vorgeschlagen. Die Anwärmvorrichtung 6 besteht in der hier gezeigten Ausführungsform aus einer massiven Metallplatte 7, die von einer Isolierschicht 8 nach oben hin wärmeisoliert ist. An der Platte 7 ist ein Traggriff 9 befestigt, mit dem ohne Verbrennungsgefahr die Platte auf den Hot Melt - wie in der Figur 2 gezeigt - aufgesetzt werden kann. Durch die Wärmekapazität der vorgewärmten Platte 7 beginnt der Hot Melt 4 im oberen Bereich anzuschmelzen, so dass anschliessend auf einfache Weise der "Deckel" der Folie 5 geschnitten und entfernt werden kann.

Optional können an der Unterseite der Platte 7 auch noch zusätzliche im Randbereich angeordnete Messer 10 befestigt werden, so dass gleichzeitig mit dem Anschmelzen des Hot Melts die Folie in diesem Bereich gekappt wird, indem die Platte 7 mit den Messern in den Hot Melt eindringt und damit den Deckel der Folie beispielsweise kreisrund abtrennt. Werden diese Messer 10 zusätzlich mit Widerhaken versehen oder zusätzliche Widerhaken 11 an der Unterseite der Platte angebracht, so löst sich nach dem Anheben der Platte die abgetrennte Folie automatisch vom angewärmten Hot Melt.

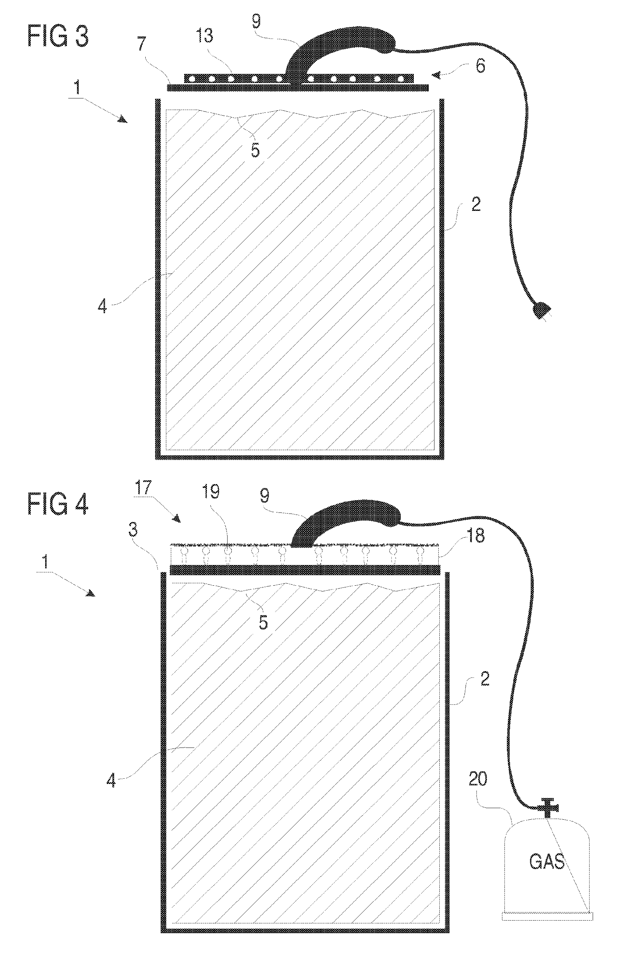

In der **Figur 3** ist einer Variante einer erfindungsgemässen Anwärmvorrichtung 6 gezeigt, die über eine massive Platte 7 verfügt, in der elektrische Heizdrähte 13 verlaufen und diese aufheizen können. An der Platte 7 ist ein Traggriff 9 befestigt, mit dem ohne Verbrennungsgefahr die Platte auf den Hot Melt - wie in der Figur 2 gezeigt - aufgesetzt werden kann. Durch die Wärme der Platte 7 beginnt der Hot Melt 4 im oberen Bereich anzuschmelzen, so dass anschliessend auf einfache Weise der "Deckel" der Folie 5 geschnitten und entfernt werden kann.

Auch hier können optional an der Unterseite der Platte 7 zusätzliche im Randbereich angeordnete Messer 10 befestigt werden, so dass gleichzeitig mit dem Anschmelzen des Hot Melts die Folie in diesem Bereich gekappt wird, indem die Platte 7 mit den Messern in den Hot Melt eindringt und damit den Deckel der Folie abtrennt. Ebenso können zusätzliche Widerhaken an der Unterseite der Platte 7 vorgesehen werden, die nach dem Ablösen der Folie diese vom angewärmten Hot Melt entfernen.

Eine ähnliche Variante der Anwärmvorrichtung ist in der **Figur 4** dargestellt, allerdings wird hier die notwendige Hitze durch Gasdüsen 19 erzeugt, die oberhalb der Platte 7 angebracht sind. Die Energiezufuhr kann durch eine angeschlossene Gasflasche 20 sichergestellt werden.

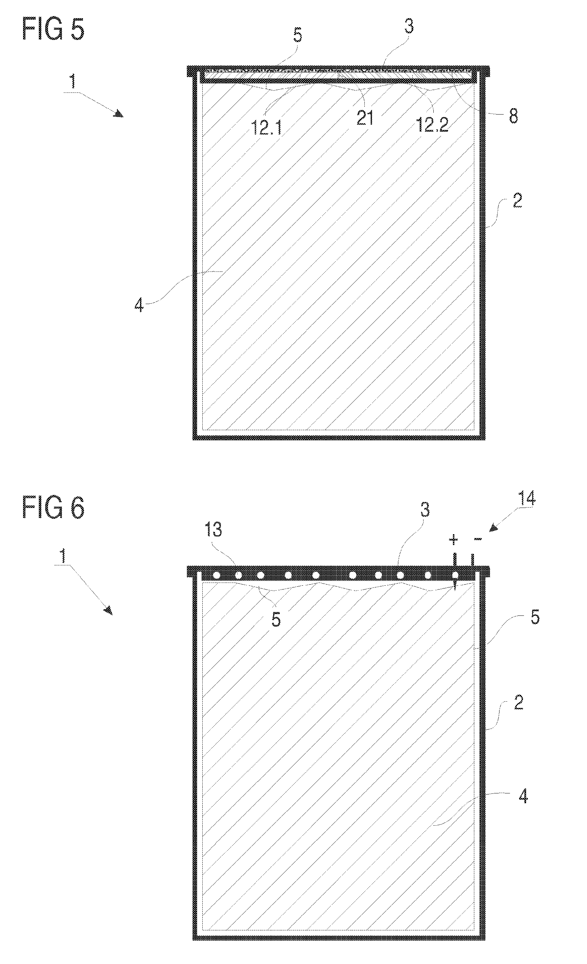

Eine andere Variante einer erfindungsgemässen Anwärmvorrichtung ist in der **Figur 5** gezeigt. Hier ist ein Transport- und Lagerbehälter 1 dargestellt, der einen Deckel 3 aufweist, in dem an der Unterseite ein Hohlraum angeordnet ist, in dem sich zwei chemische Substanzen 12.1 und 12.2 befinden, die zunächst durch eine Membran 21 voneinander getrennt sind. Wird diese Membran 21 zerstört und die beiden Chemikalien kommen untereinander in Berührung, so findet eine exotherme chemische Reaktion statt, die zu einer starken Erhitzung des Deckels, beziehungsweise der Unterseite des Deckels, führt, wodurch auch hier der nach Öffnen des Deckels 3 zugängliche Bereich der Folie 5 stark erhitzt wird und damit eine Anschmelzung des Hot Melts stattfindet, wodurch ein problemloses Abschneiden des oberen Bereiches des Beutels ermöglicht wird. Um sicherzustellen, dass die von der exothermen Reaktion der Chemikalien erzeugte Wärme auch möglichst vollständig zum Erwärmen des Hot Melts 4 genutzt wird, kann über den Chemikalien eine zusätzliche Wärmeisolationsschicht 8 angebracht werden.

Die **Figur 6** zeigt eine ähnliche Variante eines Transport- und Lagerbehälters 1. Allerdings ist hier der Deckel 3 mit zusätzlichen Heizdrähten 13 ausgestattet, die mit einem elektrischen Anschluss 14 verbunden sind. Wird an den elektrischen Anschluss 14 Strom angelegt, so erhitzt sich der Deckel 3 automatisch, wobei zusätzlich im Deckel integriert eine Temperaturregelung angeordnet sein kann. Beispielsweise kann es sich hierbei um einen Bi-Metallschalter handeln, der bei Erreichen einer voreingestellten Maximaltemperatur die elektrische Verbindung zu den Heizdrähten öffnet und damit eine Überhitzung ausschliesst.

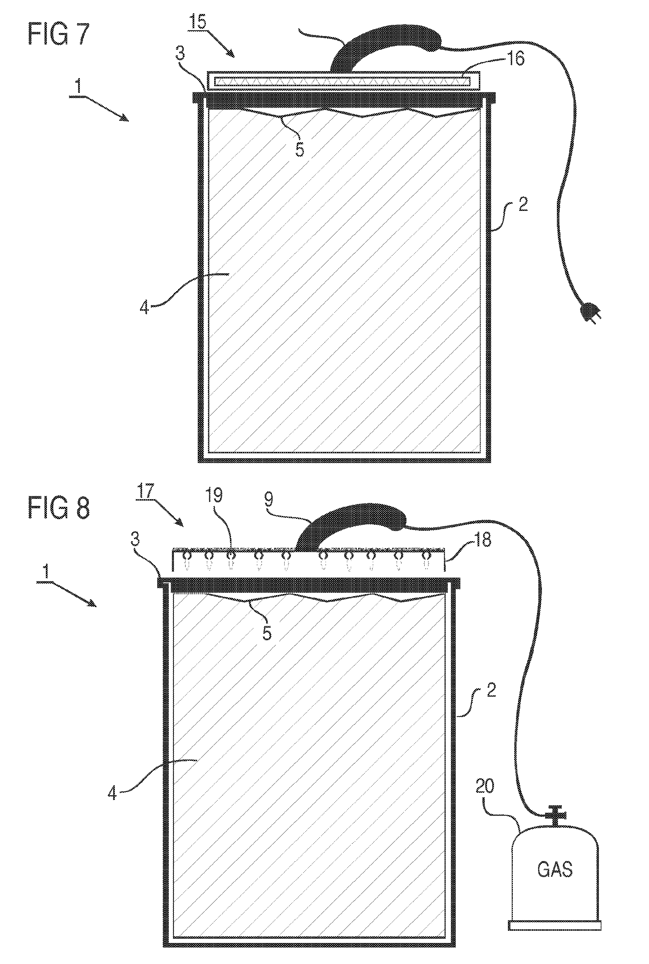

Die **Figur 7** zeigt eine Variante, in der die Heizvorrichtung getrennt von der im Deckel integrierten Platte zur Anwärmung des Hot Melts vorliegt. Der Deckel 3 des Transportbehälters ist hier in Form einer relativ massiven Metallplatte ausgeführt, auf die eine Induktionsvorrichtung 15 aufgesetzt werden kann. Diese Induktionsvorrichtung erzeugt über eingebaute Elektromagnete 16 einen Wirbelstrom im Deckel 3, wodurch eine Erhitzung des Deckels 3 erfolgt und wiederum im oberen Bereich des Hot Melts 4 ein Abschmelzen der dort befindlichen Folie 5 ermöglicht wird.

Zusätzlich ist in der **Figur 8** noch eine Variante gezeigt, in der der Deckel 3 des Transport- und Lagerbehälters 1 mit Hilfe eines aufgesetzten Gasbrenners 17 erhitzt werden kann. Der Gasbrenner 17 entspricht der Form des Deckels und wird mit festen Abstandshaltern 18 aufgesetzt, so dass die Düsen 19 einen optimalen Abstand zum darunter befindlichen Deckel 3 aufweisen. Selbstverständlich besteht die Möglichkeit in einen derartigen Gasbrenner zusätzlich eine - hier nicht dargestellt - automatische Zündvorrichtung einzubauen, so dass zunächst der Brenner 17 auf den Deckel aufgesetzt werden kann und nach Zuleiten des Gases aus einer Gasflasche 20 eine sichere Zündung des Gases an den Düsen 19 erfolgt.

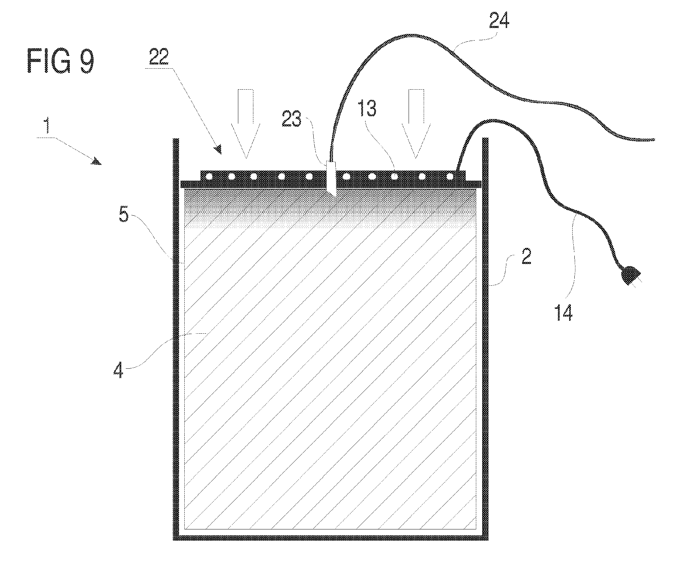

Nachdem die obere Folie mit der erfindungsgemässen Vorrichtung von dem Hot Melt gelöst und entfernt wurde, kann nun eine Absaugvorrichtung aufgesetzt werden, mit der der Hot Melt erwärmt, abgesaugt und einem Fertigungsprozess zugeführt werden kann. Eine solche Situation ist in der **Figur 9** dargestellt, die ein Fass mit seinem Gehäuse 2 zeigt, in dem sich der Hot Melt 4 befindet. Der obere Teil der Folie 5 ist bereits entfernt und die Absaugvorrichtung 22 ist aufgesetzt. In der Absaugvorrichtung 22 befinden sich Heizdrähte 13, die eine metallische Platte 7 aufheizen. Hierdurch wird der obere Bereich des Hot Melts angeschmolzen und es kann über eine Hohlnadel 23 mit angeschlossener Saugleitung 24 der geschmolzene Hot Melt abgezogen werden. Mit fortschreitender Absaugung sinkt die Absaugvorrichtung 22 - angedeutet durch die beiden Pfeile - in dem Fass nach unten, bis der Vorrat an Hot Melt aufgebraucht ist.

Insgesamt wird es also durch die Erfindung ermöglicht, auf einfache und schnelle Weise die Anschmelzung eines Hot Melts im oberen Bereich des Transport- und Lagerbehälters von der umgebenden Folie zu lösen und damit den Hot Melt der weiteren Verarbeitung schnell und einfach zuzuführen.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

### Bezugszeichenliste

- 1: Transport- und Lagerbehälter
- 2: Gehäuse
- 3: Deckel
- 4: Hot Melt (Heissschmelzklebstoff)
- 5: Folie
- 6: Anwärmvorrichtung
- 7: Platte
- 8: Isolierschicht
- 9: Traggriff
- 10: Messer
- 11: Widerhaken
- 12.1: erste chemische Substanz
- 12.2: zweite chemische Substanz
- 13: Heizdraht
- 14: elektrischer Anschluss
- 15: Induktionsvorrichtung
- 16: Magnet
- 17: Gasbrenner
- 18: Abstandshalter
- 19: Gasdüsen
- 20: Gasflasche
- 21: Membran
- 22: Absaugvorrichtung
- 23: Hohlnadel
- 24: Saugleitung

## Patentansprüche

1. Verwendung einer erhitzten Platte (7) zum Lösen von Verklebungen einer Verpackungsfolie (5) um einen Heissschmelzklebstoff (4) in einem Transportbehälter (1).

2. Verwendung gemäss dem voranstehenden Patentanspruch 1, **dadurch gekennzeichnet, dass** der Transportbehälter (1) ein Fass ist.

3. Verwendung gemäss einem der voranstehenden Patentansprüche 1 bis 2, **dadurch gekennzeichnet, dass** die Platte (7) einen kreisförmigen Querschnitt aufweist.

4. Verwendung gemäss einem der voranstehenden Patentansprüche 1 bis 3, **dadurch gekennzeichnet, dass** die Platte (7) mit einem elektrisch betriebenen Heizdraht (13) verbunden ist.

5. Verwendung gemäss einem der voranstehenden Patentansprüche 1 bis 3, **dadurch gekennzeichnet, dass** die Platte (7) mit einer gasbetriebenen Heizvorrichtung (17) ausgestattet ist.

6. Verwendung gemäss einem der voranstehenden Patentansprüche 1 bis 2, **dadurch gekennzeichnet, dass** die Platte (7) eine vorgewärmte Platte ist.

7. Verwendung gemäss einem der voranstehenden Patentansprüche 1 bis 6, **dadurch gekennzeichnet, dass** die Platte (7) eine Wärmeleistung zwischen 0,2 KW und 2,0 KW aufweisen.

8. Verwendung gemäss einem der voranstehenden Patentansprüche 1 bis 7, **dadurch gekennzeichnet, dass** die Platte (7) auf ihrer Oberseite eine Isolationsschicht (8) aufweist.

9. Verwendung gemäss einem der voranstehenden Patentansprüche 1 bis 8, **dadurch gekennzeichnet, dass** die Platte (7) auf ihrer Oberseite mindestens einen Handgriff (9) aufweist.

10. Anwärmvorrichtung zum Lösen von Verklebungen einer Verpackungsfolie (5) um einen Heissschmelzklebstoff in einem Transportbehälter mit:
- mindestens einem Handgriff (9),
- einer Platte (7), deren Querschnitt dem Querschnitt des Transportbehälters (1) angepasst ist, und
- einer Heizvorrichtung (12.1, 12.2, 15, 17) für die Platte (7).

11. Anwärmvorrichtung gemäss dem voranstehenden Patentanspruch 10, **dadurch gekennzeichnet, dass** die Heizvorrichtung mindestens einen elektrisch betriebenen Heizdraht (13) aufweist.

12. Anwärmvorrichtung gemäss dem voranstehenden Patentanspruch 10, **dadurch gekennzeichnet, dass** die Heizvorrichtung mindestens einen Gasbrenner (17,19) aufweist.

13. Anwärmvorrichtung gemäss einem der voranstehenden Patentansprüche 10 bis 12, **dadurch gekennzeichnet, dass** eine Temperaturregelvorrichtung vorgesehen ist.

14. Anwärmvorrichtung gemäss einem der voranstehenden Patentansprüche 10 bis 13, **dadurch gekennzeichnet, dass** die Heizvorrichtung fest mit der Platte (7) verbunden ist.

15. Anwärmvorrichtung gemäss einem der voranstehenden Patentansprüche 10 bis 13, **dadurch gekennzeichnet, dass** die Heizvorrichtung und die Platte (7) voneinander trennbar sind.

16. Anwärmvorrichtung gemäss einem der voranstehenden Patentansprüche 10 bis 15, **dadurch gekennzeichnet, dass** Anwärmvorrichtung ein Heissschmelzklebstoff-Ableitmittel, insbesondere in Form einer Hohlnadel oder eines Rohrstutzen, aufweist.

17. Anwärmvorrichtung gemäss einem der voranstehenden Patentansprüche 10 bis 16, **dadurch gekennzeichnet, dass** Anwärmvorrichtung an der Unterseite ein oder mehrere Messer aufweist.

18. Lager- und Transportsystem für Heissschmelzklebstoffe bestehend aus,
- einer Folienverpackung (5) für den Heissschmelzklebstoff,
- einem Transport- und Lagerbehälter (1) zur Aufnahme des in der Folienverpackung (5) befindlichen Heissschmelzklebstoffs (4), und
- einer Anwärmvorrichtung zum Lösen von Verklebungen der Verpackungsfolie (5) um den Heissschmelzklebstoff (4) in dem Transport- und Lagerbehälter (1) zumindest bestehend aus einer Platte (7), deren Querschnitt dem Querschnitt des Transport- und Lagerbehälters (1) angepasst ist, und einem Mittel zur Hitzeerzeugung (12.1, 12.2, 13, 15, 17) an der Platte.

19. Lager- und Transportsystem gemäss dem voranstehenden Patentanspruch 18, **dadurch gekennzeichnet, dass** die Anwärmvorrichtung ein beheizbarer Deckel (3) des Transport- und Lagerbehälters (1) ist.

20. Lager- und Transportsystem gemäss dem voranstehenden Patentanspruch 19, **dadurch gekennzeichnet, dass** im Deckel (3) des Transport- und Lagerbehälters (1) ein Hohlraum vorgesehen ist, in dem mindestens eine chemische Substanz (12.1, 12.2) eingelagert ist, die nach einer Initialreaktion Hitze entwickelt und den Deckel (3) erhitzt.

21. Lager- und Transportsystem gemäss dem voranstehenden Patentanspruch 19, **dadurch gekennzeichnet, dass** im Deckel (3) des Transport- und Lagerbehälters (1) ein Hohlraum vorgesehen ist, in dem mindestens zwei chemische Substanzen (12.1, 12.2) getrennt voneinander eingelagert sind, die gemeinsam eine chemische Reaktion durchführen, die Hitze entwickelt und den Deckel (3) erhitzt.

22. Lager- und Transportsystem gemäss dem voranstehenden Patentanspruch 18, **dadurch gekennzeichnet, dass** die Anwärmvorrichtung die Merkmale eines der Ansprüche 10 bis 17 aufweist.
